## Europäisches Patentamt

## European Patent Office

## Office européen des brevets

(11) Veröffentlichungsnummer: **0 078 910**
A2

# EUROPÄISCHE PATENTANMELDUNG

(21) Anmeldenummer: **82108894.5**

(22) Anmeldetag: **25.09.82**

(51) Int. Cl.³: **E 06 B 3/28**

(30) Priorität: **07.11.81 DE 3144292**

(43) Veröffentlichungstag der Anmeldung:
**18.05.83 Patentblatt 83/20**

(84) Benannte Vertragsstaaten:
**AT BE CH DE FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Oberländer, Klaus**
**Liesingstrasse 15**
**D-6450 Hanau 9(DE)**

(72) Erfinder: **Opfermann, Jürgen, Dr.**
**Fürstenbergstrasse 6**
**D-6450 Hanau 9(DE)**

(54) **Plattenförmiges Bauelement aus transparentem Kunststoff und ein Verfahren zur Umrüstung von ebenen, einfach verglasten Flächen.**

(57) Die Erfindung betrifft ein plattenförmiges, einschichtiges, rechteckiges, profiliertes Bauelement aus transparentem Kunststoff und ein Verfahren zur Umrüstung von einfach verglasten, ebenen Flächen, insbesondere an Gewächshäusern.

Mindestens an einer der beiden Längsseiten und gegebenenfalls an den Breitseiten sind die Ränder stufig abgesetzt. Parallel zu den Längsseiten durchzieht mindestens eine Rinne das Bauelement.

Die Bauelemente werden beispielsweise auf die vorhandene Einfachverglasung von Gewächshäusern gelegt. Durch gewinkelte Übergangsprofile aus Leichtmetall, die den Profilen des Unterbaus angepaßt werden, werden die Übergänge im First, Giebel, Lüftungsklappen, Traufe, Stehwandober- und Unterkante geschaffen.

D e g u s s a   Aktiengesellschaft
Frankfurt am Main

Plattenförmiges Bauelement aus transparentem
Kunststoff und ein Verfahren zur Umrüstung
von ebenen, einfach verglasten Flächen

Die Erfindung betrifft ein plattenförmiges, einschichtiges Bauelement aus transparentem Kunststoff und ein Verfahren zur Umrüstung von ebenen einfach verglasten Flächen wie sie z.B. an Gewächshäusern und Sheddächern zu finden sind, auf Doppelverglasung.

Spätestens seit der Ölkrise schenkt man der Wärmedämmung z.B. bei Glasgewächshäusern große Beachtung. Während Neubauten sofort mit einer gut isolierenden Doppelverglasung versehen werden können, besteht z.B. für die schon vorhandenen Gewächshäuser, die nur eine Einfachverglasung besitzen, das Problem der Nachrüstung, das auch durch die verschiedenen Bautypen der Gewächshäuser noch vergrößert wird.

Es sind verschiedene Typen gebräuchlich, die sich neben ihrer Größe und dem äußeren Erscheinungsbild in der Art der zum Aufbau verwendeten Profile unterscheiden.

Das Gerüst des in Deutschland verbreitesten Typs besteht aus metallischen T-Profilen, die unter Verwendung eines Kittbettes die Silikatglasscheiben tragen. Die beiden anderen, vor allem in Holland üblichen Bautypen werden als "Breithaus" bzw. "Venlohaus" bezeichnet.

. . .

Die Leichtmetallprofile eines Breithauses bestehen im Prinzip aus einer horizontalen Leiste, die in der Mitte einen vertikalen Schenkel trägt, dessen oberes Ende sich gabelt. In dieser Gabel ist ein Kunststoffmantelelement befestigt, das den vertikalen Schenkel ummantelt und mit den beiden Unterkanten die auf den horizontalen Profilteilen liegenden Scheiben kittlos abdichtet.

Bei den Venlohäusern werden H-förmige Profile zum Aufbau eingesetzt, in deren gegenüberliegende U-förmige Öffnungen Glasscheiben eingeschoben werden. Das Gerüst eines anderen Typs von Gewächshäusern besteht aus Holzsprossen.

Zur Umrüstung auf Doppelverglasung (im folgenden kurz Umrüstung genannt) sind schon verschiedene Wege vorgeschlagen worden.

Eine Möglichkeit besteht darin, die alten Glasscheiben zu entfernen und z.B. durch Stegdoppelplatten, wie sie in der DE-OS 1 609 777 beschrieben sind, zu ersetzen. Dieser Weg bedingt jedoch hohe Umrüstkosten und verursacht außerdem eine Unterbrechung der in den jeweiligen Häusern befindlichen Kulturen.

Es wurde auch schon vorgeschlagen Stegdoppelplatten mit Hilfe von speziellen Profilen über den vorhandenen Glasscheiben zu montieren (DE-OS 29 44 460). Das hat aber zur Folge, daß das Licht nun die drei Schichten der Verglasung durchdringen muß, und eine entsprechende Verminderung des Lichteinfalls zu registrieren ist.

...

Bekannt ist auch ein Verfahren zur Umrüstung, bei dem einschichtige Platten aus glasfaserverstärktem Polyesterharz auf der ursprünglichen Gewächshauskonstruktion angebracht werden. Nach einer gewissen Zeit muß allerdings mit dem Vergilben und damit einer Verringerung des Lichtdurchgangs gerechnet werden.

Das System zeigt den weiteren Nachteil, daß es nur für die Umrüstung von mit T-Profilen erbauten Glashäusern geeignet ist. Dabei werden die Platten, deren Längsseiten halbrund ausgeformt sind, so auf das Dach montiert, daß die halbrunden Ausformungen das T-Profil überdecken. Der Anschluß an die seitliche benachbarte Platte wird dadurch hergestellt, daß diese mit ihrer halbrunden Ausformung über die schon auf dem T-Profil ruhende Platte gelegt wird.

Diese Überlappungen sind naturgemäß nicht dicht, so daß Schmutz hindurch treten kann, der die Lichtdurchlässigkeit verschlechtert und zu Bewuchs, z.B. mit Algen, führt.

Der Abstand der montierten Platten von der bestehenden Altverglasung wird durch punktförmige Abstützungen und Distanzbleche bewirkt.

Aufgabe der Erfindung ist es, einen Weg zur Umrüstung von ebenen einfach verglasten Flächen zu finden, bei dem ein einschichtiges transparentes Bauelement verwendet wird, das nicht vergilbt, das einwandfrei abgedichtet werden kann und nicht auf einen bestimmten Bautyp von Häusern beschränkt ist.

Gegenstand der Erfindung ist ein einschichtiges, rechteckiges profiliertes Bauelement aus transparentem Kunststoff, das dadurch gekennzeichnet ist, daß mindestens an einer der beiden Längsseiten und gegebenen-

...

falls an den Breitseiten die Ränder stufig abgesetzt sind, und parallel zu den Längsseiten oder zu den gegebenenfalls stufig abgesetzten Breitseiten mindestens eine Rinne oder rinnenförmige Vertiefung das Bauelement durchzieht. Dabei bedeutet stufig vorzugsweise, daß das Mittelstück der Stufe mit dem Rand und der obenliegenden Fläche stumpfe Winkel bildet.

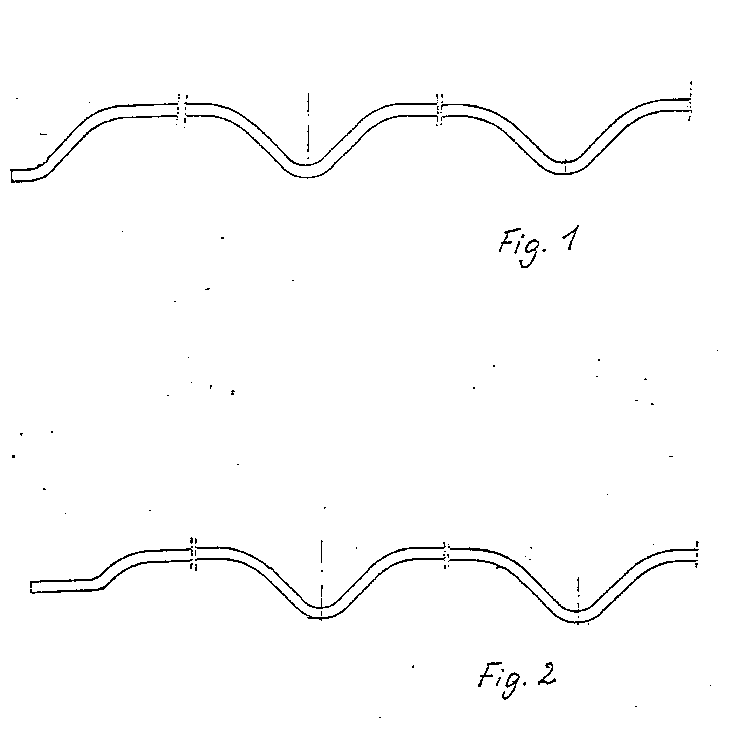

Eine andere Ausführungsform besteht aus einem Bauelement, das von zwei Rinnen, die gleichmäßig über die Breite des Bauelements verteilt sind, parallel zu den Längsseiten durchzogen wird. Die Rinnen üben gleichzeitig eine versteifende Wirkung aus. In einer Ausführungsform liegt(en) die Rinne(n) ebenso tief wie der (die) stufig abgesetzte(n) Rand (Ränder) (Fig. 1).
Besonders geeignet sind erfindungsgemäße Bauelemente, bei denen die Rinne(n) tiefer liegt(en) als der (die) stufig abgesetzte Rand (Ränder) (Fig. 2) an den Längsseiten.

In einer weiteren Ausführungsform ist die Höhe der Stufe auf der einen Seite gleich der Stufenhöhe auf der anderen Seite plus mindestens einer Schichtdicke des Bauelements plus gegebenenfalls der Schichtdicke einer elastischen Dichtungsmasse, wie sie üblicherweise zur Abdichtung, gegebenenfalls zum Verkleben dieser Bauelemente verwendet wird. Die rinnenförmige Vertiefung weist die selbe Höhe wie die höher abgesetzte Stufe auf.

In einer weiteren bevorzugten Ausführungsform der Erfindung sind die Ränder an den Längs- und Breitseiten stufig abgesetzt und mindestens eine Rinne verläuft parallel zu den Breitseiten. Ränder und Rinnen weisen jeweils mindestens eine nasenförmige Senke auf, deren Tiefe mindestens einer Schichtdicke des Bauelements entspricht.

...

Als Material für das erfindungsgemäße Bauelement kommen transparente Kunststoffe in Frage, die sich entsprechend verformen lassen, und die nicht vergilben.

Bevorzugt wird als Material Acrylglas eingesetzt. Möglich sind aber auch andere transparente Materialien wie z.B. mit Acrylglas beschichtetes PVC.

Ein weiterer Gegenstand der Erfindung ist ein Verfahren zur Umrüstung von ebenen, einfach verglasten Flächen unter Verwendung der erfindungsgemäßen Bauelemente.

Die Bauelemente liegen in dieser wie auch in allen folgenden Varianten der Umrüstung mindestens mit der (den) rinnenförmigen Vertiefung(en) bzw. den dort vorhandenen nasenförmigen Senken auf der ursprünglichen Einfachverglasung auf.

Zur besseren Ableitung z.B. des Regenwassers werden die rinnenförmigen Vertiefungen z.B. auf dem Dach bevorzugt parallel zur Neigung des Daches angeordnet.

Sind die Ränder der Bauelemente gleich tief wie die Rinnen abgesetzt, ruhen auch sie auf der ursprünglichen Einfachverglasung bzw. den Sprossen. In einer bevorzugten Ausführungsform sind Tiefe der Rinnen und Höhe der abgesetzten Ränder so abgestimmt, daß zwischen der Ebene des Bauelements und der ursprünglichen Einfachverglasung ein Abstand von 12,5 bis 13,5 mm besteht.

Reicht die Länge der Bauelemente nicht aus, um z.B. den Abstand Traufe-Giebel nahtlos zu überdecken, so werden mindestens zwei Bauelemente dachziegelartig aneinander gereiht.

...

An den Überlappungen wird dann zwischen den Bauelementen vorteilhaft ein Dichtungsband parallel zur Traufe und First eingeklemmt oder eingeklebt.

Es kann von Vorteil sein, parallel zu First und Traufe die Bauelemente durch Niederhalter zusätzlich zu sichern. Darunter sind beispielsweise schmale Bänder aus Metall oder einem anderen geeigneten Material zu verstehen, die jeweils an den Überlappungen das obenliegende Bauelement fest auf das untere drücken.

Die Längsseiten der Bauelemente, d.h. die Seiten die parallel zum Giebel verlaufen, werden an den Kanten, die nicht Gebäudekanten sind, durch Kunststoffprofile abgedichtet und festgeklammert.

Der Übergang in First, Giebel, Traufe, Lüftungsklappen, Stehwandober- und Unterkante wird durch gewinkelte Leichtmetallprofile geschaffen, die die Bauelemente gleichzeitig verankern und abdichten.

Die Erfindung ist in den Zeichnungen anhand einiger Ausführungsbeispiele näher erläutert. Es zeigen:

| Figur 1 und Figur 2: | Profile von erfindungsgemäßen Bauelementen |
| Figur 3: | Befestigung des Bauelements auf einem T-Träger |
| Figur 4: | Befestigung der Bauelemente auf einer "Breithaus"-sprosse |
| Figur 5: | Auflegen der rinnenförmigen Vertiefung des Bauelements auf der Glasfläche |

. . .

Figur 6

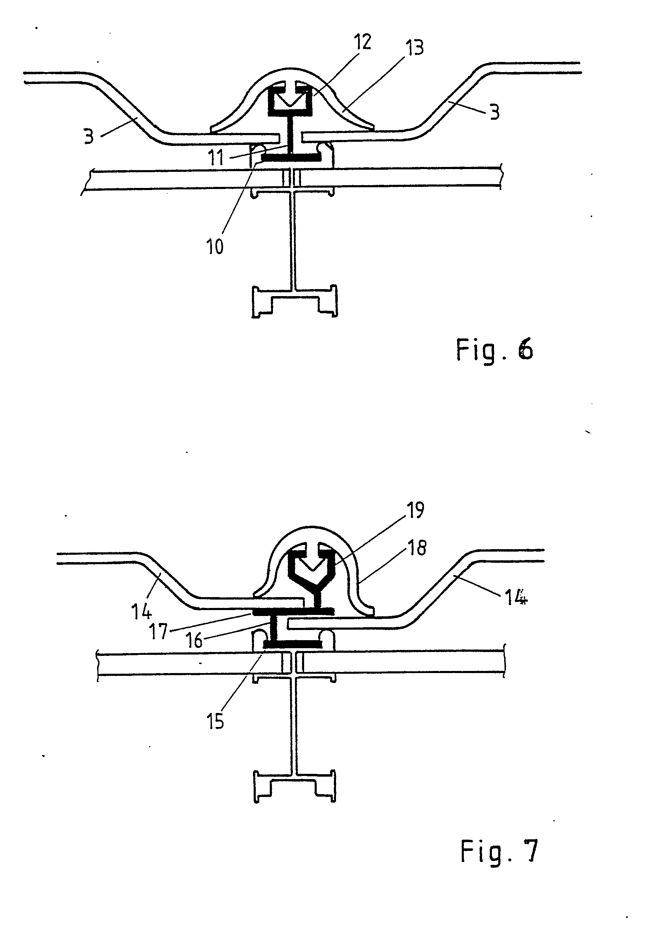

und Figur 7:          Befestigung der Bauelemente auf
                      einer "Venlohaus"-sprosse


Figur 8

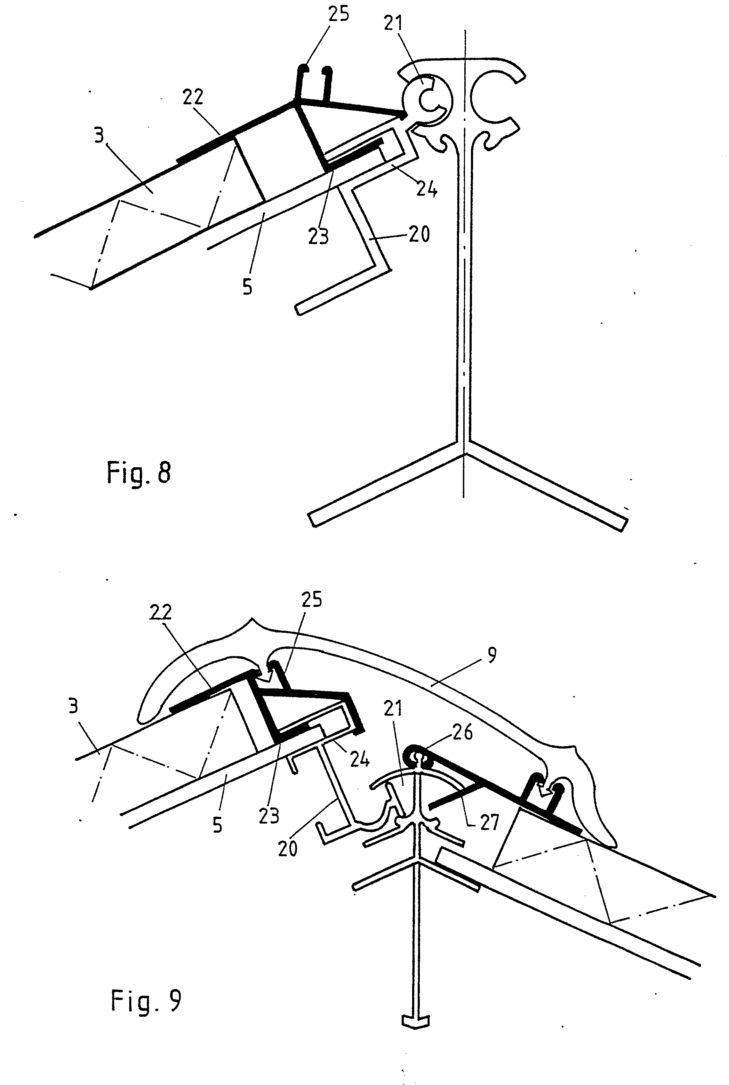

und Figur 9:          Übergangsprofile am First und
                      an der Lüftungsklappe


Figur 10

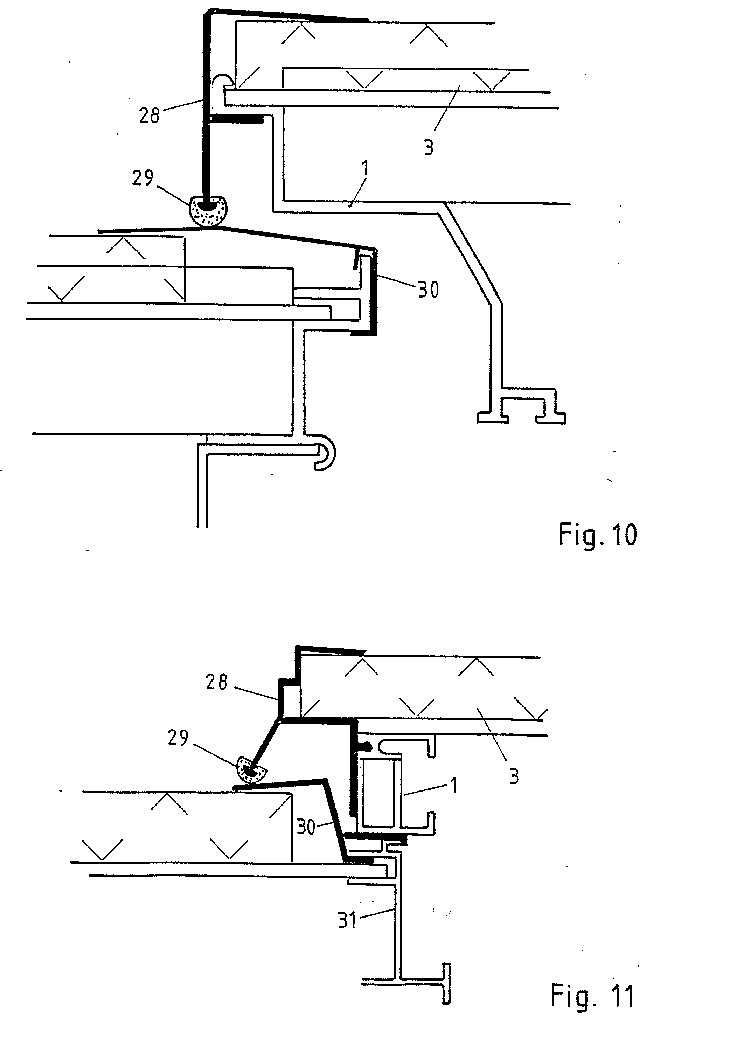

und Figur 11:         Übergangsprofile an der Lüf-
                      tungsklappenunterseite


Figur 12

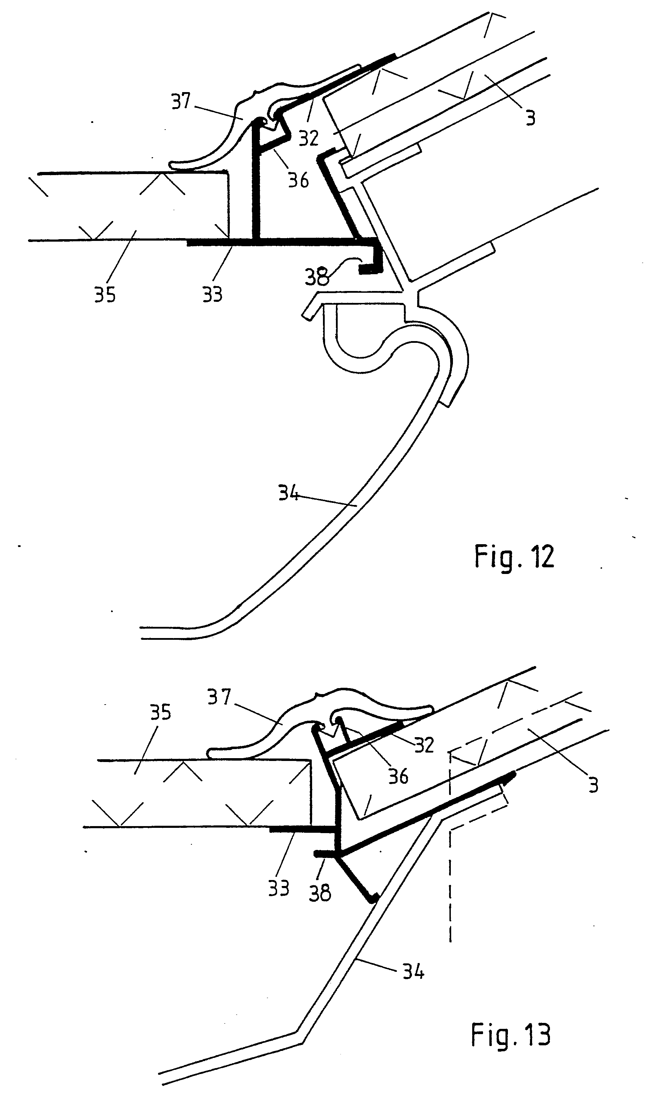

und Figur 13:         Übergangsprofile an der Traufe

...

**Beispiel 1:**

**Umrüstung von auf T-Trägern montierten Einfachverglasungen**

Die erfindungsgemäßen Bauelemente werden zur Umrüstung von auf T-Trägern montierten Einfachverglasungen verwendet, die auf der Oberseite entkittet sind.

Die Breite der Bauelemente ist bevorzugt auf den Abstand der T-Sprossen abgestimmt. In einer geeigneten Ausführungsform schließen die stufig abgesetzten Längsseiten bündig mit den auf den T-Sprossen aufliegenden Kanten der bestehenden Einfachverglasung ab (Fig. 2).

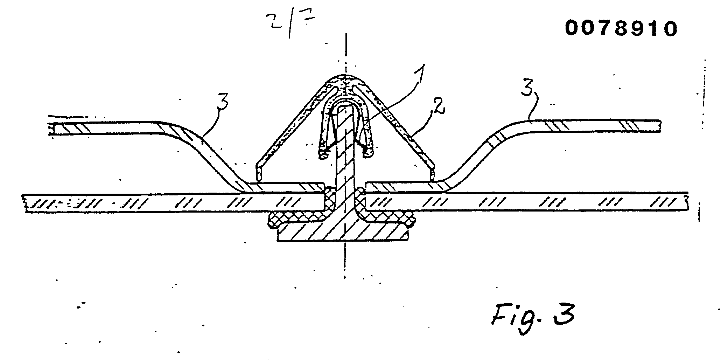

Zur Befestigung der erfindungsgemäßen Bauelemente werden in regelmäßigen Abständen über die vertikalen Schenkel des T-Profils an sich bekannte Stahlklammern (1) geschlagen, deren untere Enden beidseitig gegen die Vertikale abgespreizt sind (Fig. 3).

Diese Stahlklammern dienen der Verankerung der sie überdeckenden Kunststoffleiste (2), die zum einen den vertikalen Schenkel des T-Profils ummantelt und zum anderen mit den Kanten auf den stufig abgesetzten Rändern an den Längsseiten der Bauelemente (3) aufsitzt, diese festklammert und abdichtet.

Die Abdeckleiste wird vorteilhafterweise aus einem stabilen, witterungsbeständigen Kunststoff mit heller Einfärbung hergestellt.

In First, Giebel, Traufe, Lüftungsklappen Stehwandober- und Unterkante werden die Übergänge durch gewinkelte Leichtmetallprofile geschaffen, die die Bauelemente gleichzeitig verankern und abdichten.

...

**Beispiel 2:**

**Umrüstung von einfach verglasten Breithäusern**

Die erfindungsgemäßen Bauelemente werden ebenso zur Umrüstung von kittlosen Einfachverglasungen verwendet, wie sie bei den Breithäusern zu finden sind.

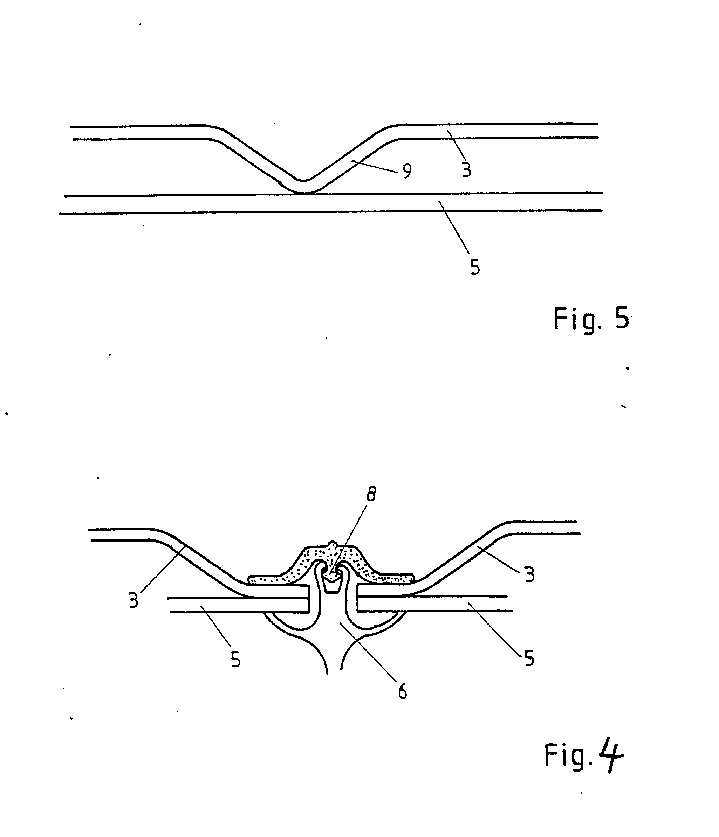

Dabei werden die Bauelemente, deren Breite bevorzugt auf den Sprossenabstand abgestimmt ist, auf die bestehende Einfachverglasung aufgelegt (Fig. 4 und 5).

In einer geeigneten Ausführungsform schließen die Längsseiten der Bauelemente (3) und die Kanten der auf den Sprossen aufliegenden Verglasung (5) bündig miteinander ab.

Ein Kennzeichen der Breithaus-Typen besteht darin, daß die ursprünglichen Scheiben auf Leichtmetallprofilen aufliegen. Zwei Scheiben sind dabei jeweils durch einen vertikalen Schenkel (6) getrennt, der sich oberhalb der Scheiben gabelt (7). In dieser in den verschiedensten Ausformungen gebräuchlichen Gabelung ist die Abdeckleiste (8) verhakt, die den vertikalen Schenkel des Profils umhüllt und mit ihren Kanten auf der Verglasung aufsitzt.

Die Kanten der vorhandenen Abdeckleisten werden leicht angehoben und die stufig abgesetzten Längsseiten des erfindungsgemäßen Bauelements untergeschoben. Man kann aber auch in einer bevorzugten Ausführungsform die Abdeckleiste erst entfernen und nach dem Auflegen der Bauelemente wieder auf die Sprosse aufziehen, so daß das Bauelement festgeklemmt und abgedichtet ist.

...

Gegebenenfalls entfernt man die alten Abdeckleisten und zieht neue, der Dicke der aufgelegten Bauelemente angepaßte Leisten auf die Sprossen.

Ansonsten liegt das Bauelement (3) mit (den) der rinnenförmigen Vertiefung(en) (9) auf der ursprünglichen Verglasung (5) auf (Fig. 5).

Für die aufgelegten erfindungsgemäßen Bauelemente müssen in First, Giebel, Traufe, an den zu öffnenden Lüftungsklappen und Stehwandober- und Unterkante Übergänge geschaffen werden, durch die die Bauelemente verankert und abgedichtet werden.

Dies geschieht durch gewinkelte Leichtmetallprofile, die den jeweiligen speziellen Gerüstprofilen angepasst werden müssen. Diese Leichtmetallprofile überdecken zum einen den Randbereich der aufgelegten Bauelemente und sind zum anderen an dem sie tragenden Gerüstprofil befestigt.

Beispiel 3:
Umrüstung von einfachverglasten Venlohäusern

Die erfindungsgemäßen Bauelemente werden auch zur Umrüstung von Einfachverglasungen von Gewächshäusern des Typs Venlo verwendet, zu deren Konstruktion H-Profile dienen.
Durch gewinkelte Profile aus Leichtmetall wird auch hier der Übergang in First, Giebel, Traufe, Lüftungsklappen, Stehwandober- und Unterkante bewirkt.

Die stufig abgesetzten Längsseiten der Bauelemente werden unter Benutzung einer elastischen Dichtungsmasse so auf die H-Profile geklebt, daß ein Rand eines Bauelements

...

0078910

bevorzugt eine Hälfte der H-Profiloberseite überdeckt. Ansonsten liegt das Bauelement mit den (der) rinnenförmigen Vertiefung(en) auf der ursprünglichen Verglasung auf.

In einer bevorzugten Ausführungsform werden zur Umrüstung die erfindungsgemäßen Bauelemente verwendet, deren Längsseiten ungleich hoch stufig abgesetzt sind. Dabei sind die höher abgesetzten Ränder auf dem H-Profil mit einer elastischen Dichtungsmasse festgeklebt und werden von den niedriger abgesetzten Ränder der seitlich anschließenden Bauelemente jeweils unter Verwendung der elastischen Dichtmasse als Zwischenschicht bedeckt.

Durch die ungleich hoch abgesetzten Ränder wird erreicht, daß die Bauelemente nach der Montage parallel zur ursprünglichen Verglasung aufliegen.

Ansonsten liegt das Bauelement mit (den) der rinnenförmigen Vertiefung(en) auf der ursprünglichen Verglasung auf.

Eine besondere Ausführungsform liegt darin, auf die H-Profile den Fuß von speziellen Umrüstprofilen aus Leichtmetall in der Weise aufzulegen, daß dieser Fuß durch das Umbiegen der seitlich überstehenden Oberkante des H-Profils festgeklemmt wird (Fig. 6 und 7). Figur 6 zeigt eine derartige Vorrichtung zur Umrüstung. Verwendet man Bauelemente, deren Ränder an den Längsseiten gleichhoch abgesetzt sind (3). Der Fuß (10) trägt eine vertikale Schiene (11), die schon am oberen Ende so

...

gabelt (12), daß ein Kunststoffprofil (13) eingeklemmt werden kann, daß die Bauelemente (3) festklammert und abdichtet.

Sollen Bauelemente mit eingesetzt werden, bei denen die Rinne(n) tiefer liegt(en) als die stufig abgesetzten Längsseiten, kann das in Figur 7 wiedergegebene stufenförmige Umrüstprofil (3) verwendet werden. Hier trägt der Fuß (15) auf einer Schiene (16) eine zum Fuß parallel verlaufende Platte (17), auf sich der dann seitlich zur Schiene (16) versetzt wiederum auf einer Schiene eine zur Aufnahme des Kunststoffprofils (18) geeignetes gegabeltes Element (19) befindet. Zur Anpassung an die unterschiedlichen Höhen, sind die seitlichen Schenkel von (18) entsprechend unterschiedlich lang ausgebildet.

Den gewinkelten Leichtmetallprofile, durch die Übergänge in First, Giebel, Traufe, Lüftungsklappen, Stehwandober- und Unterkante geschaffen werden, ist gemeinsam, daß sie mit einem Schenkel den Rand des aufgelegten Bauelements überdecken, während die weitere Profilausformung in Anpassung an das vorgegebene Bausystem des Gewächshauses vorgenommen wird und der Befestigung an dem Bausystem dient. Die Figuren 8 und 9 zeigen in seitlicher Aufsicht zwei verschiedene Möglichkeiten des Übergangs im First, die durch die unterschiedlichen Bausysteme bedingt werden.

Eingesetzt wurden in den Beispielen nur an den Längsseiten abgestufte Bauelemente.

Die Belüftungsklappe (20) ist beweglich im Gelenk (21) am Giebel angebracht. Der Schenkel (22) liegt auf dem Bauelement (3) auf, während (23) unter das vorhandene

...

U-förmige Abschlußprofil (24) des Unterbaus über die Glasscheibe (5) geschoben wird.

Die Klemmschiene (25) kann ein Abdeckprofil (9) aus Kunststoff aufnehmen, das eine zusätzliche Isolierung des Firstes bewirkt.

Unterschiedlich ist dann die weitere Ausformung der Übergangsprofile. Während in Figur (8) der die Klemmschiene (25) tragende Schenkel am Gelenkansatz (21) endet, wird der Schenkel in Figur 9 um das U-förmige Abschlußprofil (24) herumgeführt.

Figur 9 zeigt weiter auch ein Übergangsprofil am First für den feststehenden Teil des Daches. In diesem Fall kann der überstehende Knopf (26) des Unterbaus überfangen werden und mit den seitlich abgespreizten Schenkel (27) zur Befestigung dieses Übergangsprofils beitragen.

Die Figuren 10 und 11 zeigen zwei Variationen des Übergangs an der Unterkante der Lüftungsklappe. In Figur 10 werden aufgelegtes Bauelement (3) und vorhandener Unterbau durch ein F-förmiges Übergangsprofil (28) umfangen, dessen vertikaler Schenkel mit einem Puffer (29) auf den anschließenden feststehenden Bauteil (30) ruht, das in diesem Fall wiederum aus einem Umrüstprofil besteht, durch das das auf diesem feststehenden Bauteil aufliegende Bauelement befestigt wird.

Die Figur 11 zeigt eine Variation des F-förmigen Übergangprofils (28) ebenso wie eine Variation des an dem anschließenden feststehenden Bauteil (31) befestigten Übergangprofils (30).

...

Das Umrüstsystem bietet ebenso die Möglichkeit auch die zwischen den Häusern befindliche Dachrinne abzudecken und damit auch zu isolieren.

Die Figuren 12 und 13 zeigen wieder zwei Variationen von Übergangsprofilen, die einerseits mit einem Schenkel (32) das auf dem feststehenden Dach aufliegende Bauelement (3) überlappen, während die weitere Ausformung durch die Konstruktion des Unterbaus bedingt unterschiedlich ist.

Gemeinsam ist beiden Ausformungen ein waagrechtes Element (33), auf dem das die Dachrinne (34) abdeckende und isolierende Bauelement oder eine sonstige Platte (35) aufliegen.

In dem rinnenförmigen Ansatz (36) kann ein Kunststoffprofil (37) zur Abdichtung und Isolierung verhakt werden.

Der rinnenförmige Ansatz (38) dient zur Befestigung des Übergangsprofils. Das Gegenstück dazu befindet sich am Übergangsprofil auf der gegenüberliegenden Seite der Dachrinne. Der Abstand zwischen diesen rinnenförmigen Ansätzen (38) wird in regelmäßiger Weise durch eingeschobene, verwindungssteife Blechstreifen überbrückt. Diese verhindern das Verrutschen der Übergangsprofile.

Degussa   Aktiengesellschaft
Frankfurt am Main

Plattenförmiges Bauelement aus transparentem
Kunststoff und seine Verwendung zur Umrüstung
von ebenen, einfach verglasten Flächen

<u>Patentansprüche</u>

1. Plattenförmiges, einschichtiges, rechteckiges,
   profiliertes Bauelement aus transparentem
   Kunststoff, <u>dadurch gekennzeichnet</u>, daß mindestens an einer der beiden Längsseiten und
   gegebenenfalls an den Breitseiten die Ränder
   stufig abgesetzt sind, und parallel zu den
   Längsseiten oder zu den gegebenenfalls stufig
   abgesetzten Breitseiten mindestens eine Rinne
   das Bauelement durchzieht.

2. Bauelement nach Anspruch 1, <u>dadurch gekennzeich-
   net</u>, daß die Rinne(n) ebenso tief liegt(en) wie
   der (die) stufig abgesetzte(n) Rand (Ränder) an
   den Längsseiten.

3. Bauelement nach Anspruch 1, <u>dadurch gekennzeich-
   net</u>, daß die Rinne(n) tiefer liegt(en) als der
   (die) stufig abgesetzte(n) Rand (Ränder) an den
   Längsseiten.

...

4. Bauelement nach Anspruch 1 und 3, dadurch gekennzeichnet, daß an den beiden Längsseiten die Ränder in der Weise stufig abgesetzt sind, daß die Höhe der Stufe auf der einen Seite gleich Stufenhöhe auf der anderen Seite plus mindestens einer Schichtdicke des Bauelements ist, und die Tiefe der Rinne der Stufenhöhe der höher abgesetzten Längsseite entspricht.

5. Bauelement nach Anspruch 1 und 2, dadurch gekennzeichnet, daß an den Längs- und Breitseiten die Ränder stufig abgesetzt sind, mindestens eine Rinne parallel zu den Breitseiten verläuft und Ränder und Rinne mindestens je eine nasenförmige Senke aufweisen, deren Tiefe mindestens einer Schichtdicke des Bauelements entspricht.

6. Bauelement nach Anspruch 1 bis 5, dadurch gekennzeichnet, daß es aus Acrylglas besteht.

7. Verfahren zur Umrüstung von einfach verglasten ebenen Flächen unter Verwendung von Bauelementen gemäß den Ansprüchen 1 - 6, dadurch gekennzeichnet, daß man die Bauelemente jeweils mit mindestens einer rinnenförmigen Vertiefung oder gegebenenfalls mindestens einer nasenförmigen Senke auf der ursprünglichen Verglasung auflegt, die Kanten der Bauelemente an den Längsseiten mit Kunststoffprofilen abdichtet und festklammert, und durch gewinkelte Leichtmetallprofile die Übergänge in First, Giebel, Traufe Lüftungsklappen, Stehwandober- und Unterkante schafft.

...

Fig. 1

Fig. 2

Fig. 3

Fig. 5

Fig. 4

Fig. 6

Fig. 7

Fig. 8

Fig. 9

28

29

3

1

30

Fig. 10

28

29

3

30

1

31

Fig. 11

Fig. 12

Fig. 13